# EUROPEAN PATENT SPECIFICATION

(11) **EP 0 863 358 B1**
(45) Date of publication and mention of the grant of the patent: **03.07.2002**
(21) Application number: 98200642.1
(22) Date of filing: 02.03.1998
(51) Int. Cl.: F16L 47/02, F16L 13/11, B29C 65/54

(54) **Coupling sleeve for a glue coupling**
Verbindungsmuffe für eine Klebeverbindung
Manchon de raccordement pour un raccord de collage

(30) Priority: 03.03.1997 NL 1005423
(43) Date of publication of application: 09.09.1998
(73) Proprietor: Pipelife Nederland B.V., 1600 AJ Enkhuizen (NL)
(72) Inventor: Guitoneau, Hans Edward, 1613 DH Grootebroek (NL)
(74) Representative: de Bruijn, Leendert C.

(56) References cited:
- WO-A-97/21953
- CH-A- 661 109
- DE-A- 2 707 492
- GB-A- 963 910

## Description

The invention concerns a glue sleeve coupling for a pipeline comprising a glue sleeve as well as a pipeline end contained in the glue sleeve, in which glue sleeve and pipeline end together describe one ring-shaped chamber which is delimited by at least two constricted parts of the glue sleeve pointing inwardly, positioned in axial direction at a distance from each other, and filled with a gluing agent.

Such a glue sleeve coupling is disclosed in CH-A-661109. This known glue sleeve coupling has several disadvantages. The sealing between the constricted parts and the pipeline end, which dependent on the tolerances do not always fit exactly, leaves things to be desired. As a result, the glue introduced into the chamber is allowed to escape which causes insufficient coupling and sealing. The glue may escape from the chamber and stick to both the inside and outside of the pipelines. Especially excess glue inside the pipeline may cause problems. This excess glue is hard to detect and may give rise to pollution or disturbances of the medium to be transported through the pipes.

A further disadvantage is posed by the fact that the known glue sleeve cannot be properly manufactured by means of injection moulding. Especially the lips positioned deep in the inside of the glue sleeve cause problems when removing the product in question from the mould.

The invention therefore aims at providing a glue sleeve coupling without these disadvantages.

This aim is achieved by means of a glue sleeve coupling for a pipeline, comprising a glue sleeve as well as a pipeline end contained in the glue sleeve, which glue sleeve and pipeline end together describe at least a first ring-shaped chamber which is delimited by at least two constricted parts pointing inwardly, positioned in axial direction at a distance from each other and filled with a gluing agent through a filler opening in the wall of the glue sleeve, an outlet being provided diametrically opposite said filler opening, and which glue sleeve and pipeline end together describe at least a second ring-shaped chamber without a supply opening adjacent to the first chamber, in such a way that when filling the first chamber through the filler opening, the glue is collected in the first chamber and an excess of glue, if any, can escape from the first chamber into the second chamber, and in which the axial size of the chambers without a supply opening discharging into it approximately about equals the axial size of the cylindrical surface of a constricted part.

When introducing the glue through the intake, it is collected in the chamber concerned, between the constricted parts which extend to the pipeline end in such a tight-fitting way that the glue is initially stopped there. Only after the chamber is filled and glue is nevertheless added, a certain excess pressure may occur as a result of which the glue would pass the constricted part. In the case of the sleeve coupling according to the present invention, this excess glue would end up in the second chamber. The same holds for the second chamber, i.e. that the glue can be first collected there without escaping. In this way, it is possible to prevent the glue from ending up on the inside or outside of the pipes in a reliable manner.

The glue sleeve coupling preferably contains four constricted parts, positioned in axial direction at a distance from each other, which together delimit three ring-shaped chambers, while the filler opening discharges into the middle chamber.

In order to ensure a proper delimitation of the chamber each constricted part may be provided with an internal, essentially, cylindrical surface of which the size in axial direction exceeds the radial size over which the constricted part is extended from the internal wall of the glue sleeve.

The relatively large axial size of the constricted parts ensures that the gluing agent cannot easily escape from the slot, even if this is introduced with some excess pressure. The narrow slot remaining between the surfaces of each constricted part positioned right in front of each other, and the pipeline end properly hold the gluing agent as a result of adhesion.

A further advantage is that the glue sleeve applied in this coupling can indeed be easily removed from a mould. The constricted parts are relatively solid due to their larger axial size, which may cause some friction and deformation in removing them from the mould, but does not cause permanent deformation of the constricted parts.

Taking the glue sleeve from the cast may be done even more easily if the slot side of each constricted part has an inclination of approximately 10-20° in relation to the internal wall of the glue sleeve, An inclination of approximately 15° is preferable.

Moreover, an outlet for releasing the air dispelled at introduction of a gluing agent opens out into the first chamber. This outlet is diametrically positioned opposite from the intake, enabling virtually all air to be released without formation of inclusions.

An important advantage of introducing the glue in such a carefully controlled manner is that there are hardly any volatile components, such as solvents, being released. Moreover, it is possible to introduce a precise amount of glue into the chamber, sufficient to establish a reliable coupling. In this way, the use of large quantities is avoided, which is often a problem when attaching by means of a brush.

A further glue sleeve coupling is disclosed in DE-A-2707492. This coupling comprises a sleeve having sets of grooves, which are connected through an axial recess. The glue flows through the grooves of said pair via the axial recess, and the connection is completed as soon as these grooves are completely filled. There is no space for accommodating excess glue.

The invention also concerns a glue sleeve for application in the glue sleeve coupling according to the present invention.

The invention will be explained in more detail below by means of various designs represented in the figures.
Figure 1 shows the sleeve coupling according to the invention, partly in a cross-section representation.
Figure 2 partly shows a first variety of the sleeve in cross-section.
Figure 3 partly shows a second variety of the sleeve in cross-section.

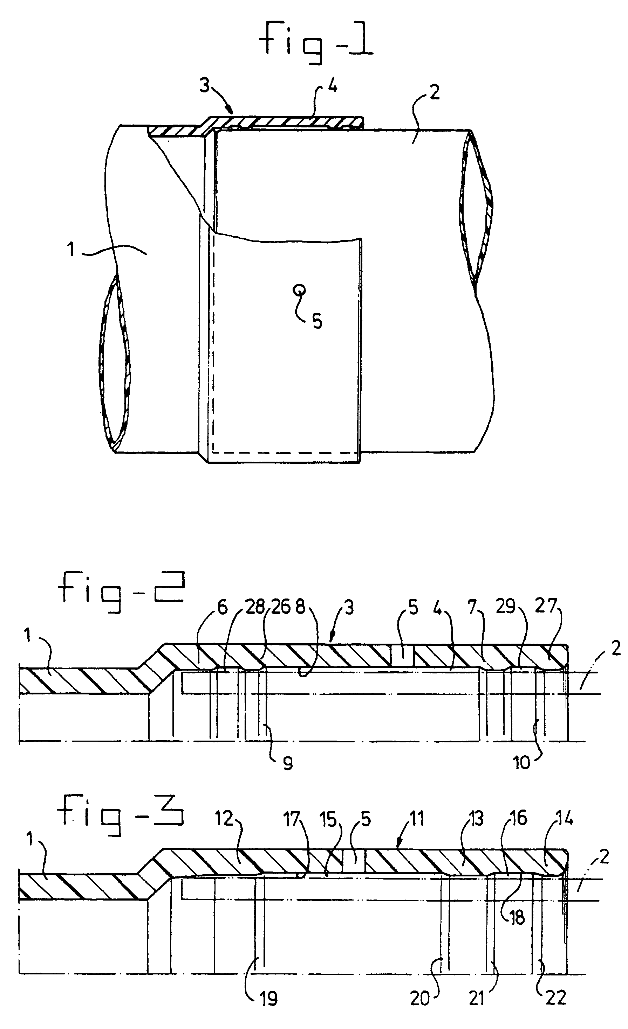

The glue sleeve coupling between the pipes 1, 2 represented in figure 1 contains a sleeve 3 according to the invention, into which the end of the other pipe 2 has been fitted.

Between the sleeve 3 and the pipe 2 a ring-shaped chamber 4 is located, which can be filled with a gluing agent through opening 5 for coupling and sealing the pipes 1, 2. On both sides of the chamber 4 two other ring-shaped chambers 28, 29 are located.

As represented in figure 1, the glue sleeve 3 according to the first variety contains four constricted parts 6, 26, 7, 27 which all have a cylindrical surface on the inside. The axial sizes of these cylindrical surfaces of the constricted parts 6, 26, 7, 27 exceed the height over which this constricted part 6, 7 extends in relation to the internal wall 8 of the glue sleeve.

The angled sides 9, 10 of the constricted parts with an angle of approximately 15° go over into the constricted part of the internal wall 8 of the glue sleeve 3 delimiting the chambers 4; 28, 29.

The advantage of this design is that in introducing the glue through opening 5, it will be collected in chamber 4 and will hardly be able to escape from the narrow slots between the constricted parts 6, 26, 7, 27 and the pipe. This is due, among others, to the axial size of the cylindrical surfaces of the constricted parts 6, 26, 7, 27 which constitute a slot so narrow that all glue will first be collected in chamber 4 before escaping, if at all.

In case of excessive introduction of glue, a rise of pressure will initially occur in chamber 4. Subsequently, the glue will penetrate the chambers 28, 29. In these chambers 28, 29 the glue is obstructed from escaping any further by the constricted parts 6, 27 which prevent any glue from ending up inside or outside the pipes 1, 2.

The variety in figure 3 shows a glue sleeve 11 with three constricted parts 12, 13, 14 each with an internal cylindrical surface. These three constricted parts 12, 13, form two cylindrical chambers 15, 16 between the internal wall 17 respectively 18 of the glue sleeve 11 and the pipe 2.

When introducing the glue through opening 5 it will first be collected in the ring-shaped chamber 17. Due to the axial size of the cylindrical surface of the constricted parts 12, 13 the glue is not likely to quickly escape from chamber 17 either.

In the case excessive introduction of glue causes glue to escape after all, this will first be collected in the second ring-shaped chamber 16, which, in turn, is again adjacent to cylindrical surface of the constricted part 14. In this variety it is very unlikely that the glue escapes in such a way that it ends up on the external surface of pipe 2.

The same applies to this second variety, i.e. that the constricted parts 12, 13, 14 go over into the walls 16, 17 by means of angled sides 19, 20, 21, 22.

The advantage of these angled transitional sides in both varieties is that the sleeve can be easily removed from the mould. The mandrel of the mould may be constructed without movable parts, since the flexibility of the plastic material enables easy sliding of the constricted parts over the mandrel, as a consequence of these angled transitional sides 9, 10 in the first variety, and 19, 20, 21, 22 in the second variety.

## Claims

1. Glue sleeve coupling for a pipeline, comprising a glue sleeve (3, 11) as well as a pipeline end (2) contained in the glue sleeve, which glue sleeve (3, 11) and pipeline end (2) together describe at least a first ring-shaped chamber (4; 15,16) which is delimited by at least two constricted parts pointing inwardly (6, 26, 7, 27; 12, 13, 14), positioned in axial direction at a distance from each other and filled with a gluing agent through a filler opening in the wall of the glue sleeve, an outlet being provided diametrically opposite said filler opening (5), and which glue sleeve (3, 11) and pipeline end (2) together describe at least a second ring-shaped chamber (28, 29; 16) without a supply opening (5) adjacent to the first chamber (4, 15), in such a way that when filling the first chamber through the filler opening (5), the glue is collected in the first chamber (4, 15) and an excess of glue, if any, can escape from the first chamber (4, 15) into the second chamber (28, 29; 16), and in which the axial size of the chambers (28, 29; 16) without a supply opening (5) discharging into it approximately about equals the axial size of the cylindrical surface of a constricted part (14, 27).

2. Glue sleeve coupling according to claim 1, in which the glue sleeve contains three constricted parts (12, 13, 14), positioned in axial direction at a distance from each other, which together delimit two ring-shaped chambers (15, 16).

3. Glue sleeve coupling according to claim 2, in which the glue sleeve contains four constricted parts (6, 26, 7, 27), positioned in axial direction at a distance from each other, which together delimit three ring-shaped chambers (4, 28, 29), and the filler opening (5) discharges into the middle chamber (4).

4. Glue sleeve coupling according to claim 3, in which the axial size of the middle chamber (4) exceeds the axial size of each external chamber (28, 29).

5. Glue sleeve coupling according to claim 1 or 2, in which the side of each constricted part (6, 26, 7, 27; 12, 13, 14) pointed towards the chamber (4, 28, 29; 15, 16) runs with an inclination of approximately 10-20° in relation to the internal wall (8; 17, 18) of the glue sleeve (3, 11).

6. Glue sleeve coupling according to claim 5, in which the inclination amounts to approximately 15°.

7. Glue sleeve coupling according to one of the previous claims, in which the first chamber (4, 15) is fitted with an outlet (5) for the purpose of releasing the air dispelled at introduction of a gluing agent.

8. Glue sleeve coupling according to one of the previous claims, in which each constricted part (6, 26, 7, 27; 12, 13, 14) has an internal diameter exceeding the external diameter of the pipeline end (2).

9. Glue sleeve coupling according to one of the previous claims, in which each constricted part (6, 26, 7, 27; 12, 13, 14) has an inside, essentially, cylindrical surface of which the size in axial direction exceeds the radial size over which this constricted part is extended from the internal wall (8; 17, 18) of the glue sleeve (3, 11).

10. Glue sleeve (3, 11) for application in the glue sleeve coupling according to one of the previous claims provided with at least two constricted parts (6, 26, 7, 27; 12, 13, 14) pointing inwardly, positioned in axial direction at a distance from each other, which delimit a part of a wall containing a filler opening for the introduction of glue, an outlet being provided diametrically opposite said filler opening (5), wherein at least a third constricted part pointing inwardly is provided which is located in axial direction at a distance from the outer constricted parts, which third constricted part and another constricted part delimit a part of a wall without an opening and in which the axial size of each part of a wall without a supply opening (5) approximately about equals the axial size of the cylindrical surface of a constricted part (14, 27).

11. Glue sleeve according to claim 10, in which four constricted parts (6, 26, 7, 27; 12, 13, 14), positioned in axial direction at a distance from each other, are provided, and the filler opening (5) is located between the middle constricted parts (26, 7).

12. Glue sleeve according to claim 11, in which the axial distance of the middle constricted parts (26, 7) in each instance exceeds the distance between a middle (26, 7) and an outer constricted part (6; 27).

13. Glue sleeve according to one of the claims 10-12, in which the side of each constricted part (6, 26, 7, 27; 12, 13, 14) to its adjacent constricted part runs with an inclination of approximately 10-20° in relation to the internal wall (8; 17, 18) of the glue sleeve (3, 11).

14. Glue sleeve according to claim 13, in which the inclination amounts to approximately 15°.

15. Glue sleeve according to one of the previous claims 10-14, in which the axial size of the space between the restricted parts (6, 26, 7, 27; 13, 14) near the in-feed end of the glue sleeve (11) approximately equals the axial size of the cylindrical surface of one of the constricted parts.

16. Glue sleeve according to one of the claims 10-15, in which between at least one of the constricted parts (26, 7, 12, 13) an outlet (5) is located for releasing the air dispelled at introduction of the gluing agent.

17. Glue sleeve according to one of the claims 10-16, in which each constricted part (6, 26, 7, 27; 12, 13, 14) has an internal, essentially cylindrical surface with a size in axial direction exceeding the radial size over which this constricted part extends from the internal wall (8; 17, 18) of the glue sleeve (3. 11).

## Patentansprüche

1. Klebemuffenverbindung für eine Rohr, umfassend sowohl eine Klebemuffe (3, 11) als auch ein in der Klebemuffe enthaltenes Rohrende (2), deren Klebemuffe (3, 11) und Rohrende (2) zusammen mindestens eine erste ringförmige Kammer (4; 15, 16) beschreiben, welche durch mindestens zwei beschränkende inwärts gerichtete Teilstücke (6, 26, 7, 27; 12, 13, 14) begrenzt ist, die in axialer Richtung, von einander beabstandet, positioniert sind und mit einem Klebemittel durch eine Füllöffnung in der Wand der Klebemuffe ausgefüllt sind und mit einem Auslass auf der diametrisch gegenüberliegenden Seite der Einfüllöffnung (5) versehen sind und deren Klebemuffe (3, 11) und Rohrende (2) zusammen mindestens eine zweite ringförmige Kammer (28, 29; 16) ohne eine Zufuhröffnung (5) beschreiben, derart zu der ersten Kammer (4, 15) benachbart, dass, wenn die erste Kammer über die Einfüllöffnung (5) gefüllt wird, die Klebe in der ersten Kammer (4, 15) gesammelt wird und ein Überschuss an Klebe, sofern vorhanden, aus der ersten Kammer (4, 15) in die zweite Kammer (28, 29; 16) entweichen kann, und in der das axiale Ausmaß der Kammern (28, 29;16) ohne eine in diese einmündende Zufuhröffnung (5), ungefähr circa dem axialen Ausmaß der zylindrischen Oberfläche eines begrenzenden Teilstücks (14, 27), entspricht.

2. Klebemuffenverbindung nach Anspruch 1, in welcher die Klebemuffe drei beschränkende Teilstücke (11, 13, 14) enthält, die in axialer Richtung voneinander beabstandet angeordnet sind, und welche zusammen zwei ringförmige Kammern (15, 16) begrenzen.

3. Klebemuffenverbindung nach Anspruch 2, in welcher die Klebemuffe vier begrenzende Teilstücke (6, 26, 7, 27) enthält, die in axialer Richtung von einander beabstandet angeordnet sind, und welche die zusammen drei ringförmige Kammern (4, 28, 29) begrenzen und die Einfüllöffnung (5) in die Mittelkammer (4) ausläuft.

4. Klebemuffenverbindung nach Anspruch 3, in welcher das axiale Ausmaß der Mittelkammer (4) das axiale Ausmaß jeder der äußeren Kammern (28, 29) überschreitet.

5. Klebemuffenverbindung nach Anspruch 1 oder 2, in welcher die Seite jedes in Richtung auf die Kammer (4, 28, 29;15, 16) ausgerichteten begrenzenden Teilstückes (6, 26, 7, 27; 12, 13, 14) mit einer Neigung von ungefähr 10 bis 20 Grad in Bezug zu der inneren Wand (8; 17, 18) der Klebemuffe (3, 11) verläuft.

6. Klebemuffenverbindung nach Anspruch 5, in welcher die Neigung ungefähr 15 Grad beträgt.

7. Klebemuffenverbindung nach einem vorangegangenen Ansprüche, in welcher die erste Kammer (4, 15) mit einem Auslass (5) zum Entlassen der Luft bei Einzuführung eines Klebemittels versehen ist.

8. Klebemuffenverbindung nach einem der vorangegangenen Ansprüche, in welcher jedes begrenzende Teilstück (6, 26, 7, 27; 12, 13, 14) einen inneren Durchmesser hat, der den äußeren Durchmesser des Rohrendes (2) überschreitet.

9. Klebemuffenverbindung nach einem der vorangegangenen Ansprüche, in welcher jedes begrenzende Teilstück (6, 26, 7, 27; 12, 13, 14) eine innenseitige, im wesentlichen zylindrische Oberfläche hat, deren Ausmaß in axialer Richtung das radiale Ausmaß über das jenes begrenzende Teilstück von der inneren Wand (8; 17, 18) der Klebemuffe (3, 11) ausgedehnt ist, überwiegt.

10. Klebemuffe (3, 11) zur Anwendung in der Klebemuffenverbindung nach einem der vorangegangenen Ansprüche, ausgestattet mit mindestens zwei begrenzenden Teilstücken (6, 26, 7, 27; 12, 13, 14), inwärts gerichtet und in axialer Richtung voneinander beabstandet, angeordnet, welche einen Abschnitt einer Wand, enthaltend eine Einfüllöffnung (5) für die Zufuhr eines Klebemittels begrenzen und deren Auslass diametrisch gegenüber der Einfüllöffnung (5) liegt, und ausgestattet mit mindestens einem dritten inwärts ausgerichteten begrenzenden Teilstück, welches in axialer Richtung angeordnet ist mit einem Abstand von den äußeren begrenzenden Teilstücken, wobei das dritte begrenzende Teilstück und eine weiteres begrenzendes Teilstück einen Teil von einer Wand ohne eine Öffnung begrenzen und wobei das axiale Ausmaß eines jeden Teiles einer Wand ohne eine Zuführöffnung (5) ungefähr das gleiche axiale Ausmaß hat, wie die zylindrische Oberfläche eines begrenzenden Teilstückes (14, 27).

11. Klebemuffe nach Anspruch 10, wobei vier begrenzende Teilstücke (6, 26, 7, 27; 12, 13, 14), die in axialer Richtung voneinander beabstandet angeordnet sind, bereitgestellt werden und die Einfüllöffnung (5) zwischen den mittleren begrenzenden Teilstücken (26, 7) angeordnet ist

12. Klebemuffe nach Anspruch 11, wobei der axiale Abstand der mittleren begrenzenden Teilstücke (26, 7) in jedem Fall den Abstand zwischen einem mittleren (26, 7) und einem äußeren begrenzenden Teilstück (6; 27) überschreitet.

13. Klebemuffe nach einem der Ansprüche 10 bis 12, wobei die Seite eines jeden begrenzenden Teilstücks (6, 26, 7, 27; 12, 13, 14) mit einer Neigung von ca. 10 bis 20 Grad in Bezug zu der inneren Wand (8; 17, 18) der Klebemuffe (3, 11) zu seinem benachbarten begrenzenden Teilstück verläuft.

14. Klebemuffe nach Anspruch 13, wobei die Neigung sich auf ca. 15 Grad beträgt.

15. Klebemuffe nach einem der vorangegangenen Ansprüche 10 bis 14, wobei das axiale Ausmaß des Raumes zwischen den begrenzenden Teilstücken (6, 26, 7, 27; 13, 14) nahe des Einschubendes der Klebemuffe (11) ungefähr gleich ist mit dem axialen Ausmaß der zylindrischen Oberfläche eines der begrenzenden Teilen.

16. Klebemuffe nach einem der Ansprüche 10 bis 15, wobei zwischen mindestens einem der begrenzenden Teilstücke (26,7, 12, 13) ein Auslass (5) zum Entlassen der Luft, die bei Zuführung des Klebemittels verdrängt wird, angeordnet ist.

17. Klebemuffe nach einem der Ansprüche 10 bis 16, wobei jedes begrenzende Teilstück (6, 26, 7, 27; 12, 13, 14) eine innere, im wesentlichen zylindrische Oberfläche hat mit einem Ausmaß in axialer Richtung, dass das radiale Ausmaß über das dieses begrenzende Teilstück von der inneren Wand (8; 17, 18) der Klebemuffe (3, 11) ausgedehnt ist, überschreitet.

## Revendications

1. Manchon de collage pour une canalisation, comprenant un manchon de collage (3, 11) ainsi qu'une extrémité de canalisation (2) contenue dans le manchon de collage, lesquels manchon de collage (3, 11) et extrémité de canalisation (2) forment ensemble au moins une première chambre annulaire (4 ; 15, 16) qui est délimitée par au moins deux parties rétrécies formant une pointe vers l'intérieur (6, 26, 7, 27 ; 12, 13, 14), positionnées dans le sens axial à une certaine distance l'une de l'autre et remplies d'un agent de collage via une ouverture de remplissage située dans la paroi du manchon de collage, un orifice étant prévu de manière diamétralement opposée à ladite ouverture de remplissage (5), et lesquels manchon de collage (3, 11) et extrémité de canalisation (2) forment ensemble au moins une seconde chambre annulaire (28, 29 ; 16) sans ouverture d'alimentation (5) adjacente à la première chambre (4, 15), de telle sorte que, lors du remplissage de la première chambre via l'ouverture de remplissage (5), la colle est recueillie dans la première chambre (4, 15) et un excès de colle, s'il y en a, peut s'échapper de la première chambre (4, 15) pour atteindre la seconde chambre (28, 29 ; 16), et dans lesquelles la taille de l'axe des chambres (28, 29 ; 16), sans qu'une ouverture d'alimentation (5) ne débouche à l'intérieur, équivaut approximativement à la taille de l'axe de la surface cylindrique d'une partie rétrécie (14, 27).

2. Raccord de manchon de collage selon la revendication 1, dans lequel le manchon de collage contient trois parties rétrécies (12, 13, 14) positionnées dans le sens axial à une certaine distance l'une de l'autre, qui délimitent ensemble deux chambres annulaires (15, 16).

3. Raccord de manchon de collage selon la revendication 2, dans lequel le manchon de collage contient quatre parties rétrécies (6, 26, 7, 27), positionnées dans le sens axial à une certaine distance l'une de l'autre, qui délimitent ensemble trois chambres annulaires (4, 28, 29) et dans lequel l'ouverture de remplissage (5) débouche sur la chambre du milieu (4).

4. Raccord de manchon de collage selon la revendication 3, dans lequel la taille de l'axe de la chambre du milieu (4) dépasse la taille de l'axe de chaque chambre externe (28, 29).

5. Raccord de manchon de collage selon la revendication 1 ou 2, dans lequel le côté de chaque partie rétrécie (6, 26, 7, 27 ; 12, 13, 14) pointée vers la chambre (4, 28, 29 ; 15, 16) est inclinée selon un angle d'inclinaison d'environ 10 à 20° par rapport à la paroi interne (8 ; 17, 18) du manchon de collage (3, 11).

6. Raccord de manchon de collage selon la revendication 5, dans lequel l'inclinaison équivaut environ à 15°.

7. Raccord de manchon de collage selon l'une quelconque des revendications précédentes, dans lequel la première chambre (4, 15) est équipée d'un orifice (5) dans le but de libérer l'air dissipé lors de l'introduction d'un agent de collage.

8. Raccord de manchon de collage selon l'une quelconque des revendications précédentes, dans lequel chaque partie rétrécie (6, 26, 7, 27 ; 12, 13, 14) possède un diamètre interne dépassant le diamètre externe de l'extrémité de canalisation (2).

9. Raccord de manchon de collage selon l'une quelconque des revendications précédentes, dans lequel chaque partie rétrécie (6, 26, 7, 27 ; 12, 13, 14) possède une surface intérieure, pour l'essentiel, cylindrique, dont la taille dans le sens axial dépasse la taille radiale au-dessus de laquelle cette partie rétrécie s'étend à partir de la paroi interne (8 ; 17, 18) du manchon de collage (3, 11).

10. Manchon de collage (3, 11) destiné à être appliqué dans le raccord de manchon de collage selon l'une quelconque des revendications précédentes, équipé d'au moins deux parties rétrécies (6, 26, 7, 27 ; 12, 13, 14) formant une pointe vers l'intérieur, positionnées dans le sens axial à une certaine distance l'une de l'autre, qui délimitent une partie d'une paroi contenant une ouverture de remplissage pour l'introduction de colle, un orifice étant prévu de manière diamétralement opposée à ladite ouverture de remplissage (5), dans lequel au moins une troisième partie rétrécie formant une pointe vers l'intérieur est fournie, qui est située dans le sens axial à une certaine distance des autres parties rétrécies, laquelle troisième partie rétrécie ainsi qu'une autre partie rétrécie délimitent une partie d'une paroi, sans ouverture, et dans lequel la taille de l'axe de chaque partie d'une paroi, sans ouverture d'alimentation (5), équivaut approximativement à la taille de l'axe de la surface cylindrique d'une partie rétrécie (14, 27).

11. Manchon de collage selon la revendication 10, dans lequel quatre parties rétrécies (6, 26, 7, 27 ; 12, 13, 14), positionnées dans le sens axial à une certaine distance l'une de l'autre, sont prévues, et dans lequel l'ouverture de remplissage (5) est située entre les parties rétrécies centrales (26, 7).

12. Manchon de collage selon la revendication 11, dans lequel la distance axiale des parties rétrécies centrales (26, 7), dans chaque cas, dépasse la distance comprise entre une partie rétrécie centrale (26, 7) et extérieure (6 ; 27).

13. Manchon de collage selon l'une quelconque des revendications 10 à 12, dans lequel le côté de chaque partie rétrécie (6, 26, 7, 27; 12, 13, 14) par rapport a sa partie rétrécie adjacente est incliné selon un angle d'inclinaison d'environ 10 à 20° par rapport à la paroi interne (8; 17, 18) du manchon de collage (3, 11).

14. Manchon de collage selon la revendication 13, dans lequel l'inclinaison équivaut environ à 15°.

15. Manchon de collage selon l'une quelconque des revendications précédentes 10 à 14, dans lequel la taille de l'axe de l'espace qui existe entre les parties rétrécies (6, 26, 7, 27 ; 13, 14) situées à proximité de l'extrémité d'entrée d'alimentation du manchon de collage (11) équivaut approximativement à la taille de l'axe de la surface cylindrique de l'une des parties rétrécies.

16. Manchon de collage selon l'une quelconque des revendications 10 à 15, dans lequel, entre au moins l'une des parties rétrécies (26, 7, 12, 13) se situe un orifice (5) destiné à libérer l'air dissipé lors de l'introduction de l'agent de collage.

17. Manchon de collage selon l'une quelconque des revendications 10 à 16, dans lequel chaque partie rétrécie (6, 26, 7, 27 ; 12, 13, 14) possède une surface interne, pour l'essentiel, cylindrique, dont la taille dans le sens axial dépasse la taille radiale au-dessus de laquelle cette partie rétrécie s'étend à partir de la paroi interne (8 ; 17, 18) du manchon (3, 11).
